# EUROPÄISCHE PATENTSCHRIFT

(11) **EP 2 802 726 B1**
(45) Veröffentlichungstag und Bekanntmachung des Hinweises auf die Patenterteilung: **27.04.2016**
(21) Anmeldenummer: 12806056.3
(22) Anmeldetag: 20.12.2012
(51) Int. Cl.: E06B 3/673, E06B 3/663

(54) **ABSTANDSHALTER FÜR ISOLIERVERGLASUNGEN**
SPACER FOR INSULATING GLAZING
PIÈCE INTERCALAIRE POUR VITRAGES ISOLANTS

(30) Priorität: 13.01.2012 EP 12151116
(43) Veröffentlichungstag der Anmeldung: 19.11.2014
(60) Teilanmeldung: 15192495.8
(73) Patentinhaber: Saint-Gobain Glass France, 92400 Courbevoie (FR)
(72) Erfinder: SCHREIBER, Walter, 52074 Aachen (DE)
(74) Vertreter: Lendvai, Tomas
(86) Internationale Anmeldenummer: PCT/EP2012/076341
(87) Internationale Veröffentlichungsnummer: WO 2013/104507

(56) Entgegenhaltungen:
- EP-A1- 0 852 280
- EP-A2- 0 261 923
- EP-A2- 0 430 889
- WO-A1-2008/022877
- DE-A1- 19 805 348
- DE-A1- 19 807 454

## Beschreibung

Die Erfindung betrifft einen Abstandshalter für Isolierverglasungen, eine Isolierverglasung und deren Verwendung.

Die Wärmeleitfähigkeit von Glas ist etwa um den Faktor 2 bis 3 niedriger als die von Beton oder ähnlichen Baustoffen. Da Scheiben in den meisten Fällen jedoch deutlich dünner als vergleichbare Elemente aus Stein oder Beton ausgelegt sind, verlieren Gebäude dennoch häufig den größten Wärmeanteil über die Außenverglasung. Besonders deutlich wird dieser Effekt bei Hochhäusern mit teilweisen oder kompletten Glasfassaden. Die notwendigen Mehrkosten für Heizung und Klimaanlagen machen einen nicht zu unterschätzender Teil der Unterhaltungskosten eines Gebäudes aus. Zudem werden im Zuge strengerer Bauvorschriften niedrigere Kohlendioxid Emissionen gefordert. Ein wichtiger Lösungsansatz hierfür sind Isolierverglasungen. Isolierverglasungen sind vor allem im Zuge immer schneller steigender Rohstoffpreise und strengeren Umweltschutzauflagen nicht mehr aus dem Gebäudebau wegzudenken. Isolierverglasungen machen daher einen zunehmend größeren Teil der nach außen gerichteten Verglasungen aus. Isolierverglasungen enthalten in der Regel mindestens zwei Scheiben aus Glas oder polymeren Materialien. Die Scheiben sind über einen vom Abstandshalter (Spacer) definierten Gas- oder Vakuumraum voneinander getrennt. Das Wärmedämmvermögen von Isolierglas ist deutlich höher als Einfachglas und kann in Dreifachverglasungen oder mit speziellen Beschichtungen noch weiter gesteigert und verbessert werden. So ermöglichen beispielsweise silberhaltige Beschichtungen eine verringerte Transmission von infraroter Strahlung und senken so die Aufheizung eines Gebäudes im Sommer. Neben der wichtigen Eigenschaft der Wärmeisolierung spielen im Bereich der Gebäudeverglasung zunehmend auch optische und ästhetische Merkmale eine wichtige Rolle.

Insbesondere bei Gebäuden mit einer großflächigen Glasaußenfassade spielt die Isolierwirkung nicht nur aus Kostengründen eine wichtige Rolle. Da die Wärmedämmung von dem in der Regel im Vergleich zum Mauerwerk sehr dünnem Glas schlechter ist, sind Verbesserungen in diesem Bereich notwendig.

Neben der Beschaffenheit und dem Aufbau des Glases sind auch die weiteren Komponenten einer Isolierverglasung von großer Bedeutung. Die Dichtung und vor allem der Abstandshalter haben einen großen Einfluss auf die Qualität der Isolierverglasung.
Undichtigkeiten innerhalb des Abstandshalters können leicht zu einem Verlust eines inerten Gases zwischen den Isolierverglasungen führen. Neben einer schlechteren Dämmwirkung kann es zudem leicht zu eindringender Feuchtigkeit in der Isolierverglasung führen. Durch Feuchtigkeit gebildeter Niederschlag zwischen den Scheiben der Isolierverglasung verschlechtert somit ganz wesentlich die optische Qualität und macht in vielen Fällen einen Austausch der gesamten Isolierverglasung notwendig.
Mögliche Ansätze zur Verbesserung der Abdichtung und eine damit verbundene Reduzierung der Wärmeleitfähigkeit ist die Aufbringung einer Barrierefolie auf dem Abstandshalter. Diese Folie wird in der Regel im Bereich der Außendichtung auf dem Abstandshalter befestigt. Gebräuchliche Folienmaterialien beinhalten Aluminium oder Edelstahl, welche eine gute Gasdichtigkeit aufweisen. Die Metalloberfläche gewährleistet gleichzeitig eine gute Verklebung des Abstandshalters mit der Dichtmasse.

DE 198 07 454 A1 offenbart einen Abstandshalter gemäß dem Oberbegriff des unabhängigen Anspruchs 1.

DE 40 24 697 A1 offenbart ein wasserdichtes Mehrscheiben-Isolierglas umfassend mindestens zwei Glasscheiben und einen Profilabstandshalter. Die Abdichtung erfolgt über Polyvinylidenchlorid-Folien oder Beschichtungen auf dem Abstandshalter. Zusätzlich kann die Randverklebung mithilfe einer Polyvinylidenchlorid-haltigen Lösung erfolgen.
EP 0 852 280 A1 offenbart einen Abstandshalter für Mehrscheiben-Isolierverglasungen. Der Abstandshalter umfasst eine Metall-Folie an der Verklebungsfläche und einen Glasfaseranteil im Kunststoff des Grundkörpers.
DE 196 25 845 A1 offenbart eine Isolierglaseinheit mit einem Abstandshalter aus thermoplastischen Olefinen. Der Abstandshalter weist eine Wasserdampfdurchlässigkeit kleiner als 1 (g mm)/(mm² d) sowie eine hohe Zugfestigkeit und Shore-Härte auf. Des Weiteren umfasst der Abstandshalter eine gasdichte Folie als Wasserdampfsperre.
EP 0 261 923 A2 offenbart eine Mehrscheiben-Isolierverglasung mit einem Abstandshalter aus einem feuchtigkeitsdurchlässigen Schaum mit einem integrierten Trockenmittel. Die
Anordnung wird bevorzugt durch eine äußere Versiegelung und einen gas- und feuchtigkeitsdichte Folie abgedichtet. Die Folie kann metallbeschichtetes PET und Polyvinylidenchloridcopolymere enthalten.
Die Aufgabe der Erfindung liegt darin, einen Abstandshalter für eine Isolierverglasung bereitzustellen, der eine verbesserte, langzeitstabile Isolierwirkung bei gleichzeitig einfacher Montage ermöglicht.
Die Aufgabe der vorliegenden Erfindung wird erfindungsgemäß durch einen Abstandshalter (Spacer) gemäß dem unabhängigen Anspruch 1 gelöst. Bevorzugte Ausführungen gehen aus den Unteransprüchen hervor.
Eine erfindungsgemäße Isolierverglasung und deren erfindungsgemäße Verwendung gehen aus weiteren unabhängigen Ansprüchen hervor.
Der erfindungsgemäße Abstandshalter für Mehrfachscheiben-Isolierverglasung umfasst mindestens einen Verbund aus einem glasfaserverstärkten, polymeren Grundkörper und einer polymeren Isolationsfolie. Durch die Wahl des Glasfaseranteils im Grundkörper kann der Wärmeausdehnungskoeffizient des Grundkörpers variiert und angepasst werden. Durch Anpassung des Wärmeausdehnungskoeffizienten des Grundkörpers und der polymeren Isolationsfolie lassen sich temperaturbedingte Spannung zwischen den unterschiedlichen Materialien und ein Abplatzen der Isolationsfolie vermeiden. Der Grundkörper weist bevorzugt einen Glasfaseranteil von 20 % bis 50 %, besonders bevorzugt von 30 % bis 40 % auf. Der Glasfaseranteil im Grundkörper verbessert gleichzeitig die Festigkeit und Stabilität. Der Grundkörper umfasst zwei parallel verlaufende Scheibenkontaktflächen, eine Verklebungsfläche und eine Verglasungsinnenraumfläche. Die erste Scheibenkontaktfläche und die zweite Scheibenkontaktfläche sowie die Verklebungsfläche sind direkt oder alternativ über Verbindungsflächen miteinander verbunden. Die bevorzugt zwei Verbindungsflächen weisen bevorzugt einen Winkel von 30° bis 60° zu den Scheibenkontaktflächen auf. Auf der Verklebungsfläche oder alternativ der Verklebungsfläche und den Verbindungsflächen befindet sich die Isolationsfolie. Die Isolationsfolie umfasst mindestens eine polymere Folie in einer Dicke von 10 µm bis 100 µm. Auf der polymeren Folie sind mindestens eine weitere polymere Schicht in einer Dicke von 5 µm bis 80 µm sowie mindestens zwei metallische Schichten und/oder mindestens zwei keramische Schichten mit einer Dicke jeder Schicht von 10 nm bis 1500 nm aufgebracht.

Die polymere Schicht weist eine Dicke von 5 µm bis 80 µm auf. In einer anderen bevorzugten Ausführungsform beträgt die Dicke der polymeren Schicht 10 µm bis 80 µm.
In einer besonders bevorzugten Ausführungsform bestehen die polymere Folie und die polymere Schicht aus dem gleichen Material. Dies ist besonders vorteilhaft, da eine geringere Vielfalt der verwendeten Materialien den Produktionsablauf vereinfacht. Dabei werden die polymere Folie und die polymeren Schichten bevorzugt in der gleichen Materialstärke eingesetzt, so dass das gleiche Ausgangsmaterial für alle polymeren Bestandteile der Isolationsfolie verwendet werden kann.

Die Isolationsfolie enthält mindestens zwei metallische Schichten und/oder zwei keramische Schichten, die alternierend mit mindestens einer polymeren Schicht angeordnet sind. Beispielsweise kann die Isolationsfolie aus einer polymeren Folie, auf der sich eine metallische Schicht befindet, einer darüber angebrachten polymeren Schicht und einer zweiten metallischen Schicht bestehen. Bevorzugt sind die außen liegenden Schichten jedoch polymerhaltig und werden von der polymeren Folie und/oder der polymeren Schicht gebildet. Innerhalb einer Isolationsfolie können auch keramische Schichten und metallische Schichten verwendet werden. Die alternierenden Komponenten der Isolationsfolie können auf die verschiedensten nach dem Stand der Technik bekannten Methoden verbunden bzw. aufeinander aufgetragen werden. Methoden zur Abscheidung metallischer oder keramischer Schichten sind dem Fachmann hinlänglich bekannt. Die Verbindung der einzelnen Komponenten kann über einen Kleber erfolgen. Die Verwendung einer Isolationsfolie mit alternierender Schichtenabfolge ist besonders vorteilhaft im Hinblick auf die Dichtigkeit des Systems. Ein Fehler in einer der Schichten führt dabei nicht zu einem Funktionsverlust der Isolationsfolie. Im Vergleich dazu kann bei einer Einzelschicht bereits ein kleiner Defekt zu einem vollständigen Versagen führen. Des Weiteren ist die Auftragung mehrerer dünner Schichten im Vergleich zu einer dicken Schicht vorteilhaft, da mit steigender Schichtdicke die Gefahr interner Haftungsprobleme ansteigt. Ferner verfügen dickere Schichten über eine höhere Leitfähigkeit, so dass eine derartige Folie thermodynamisch weniger geeignet ist.
Die Isolationsfolie weist bevorzugt eine Gaspermeation kleiner als 0,001 g/(m² h) auf.

Der Verbund aus Grundkörper und Isolationsfolie weist bevorzugt einen PSI Wert kleiner(gleich) als 0,05 W/mK, besonders bevorzugt kleiner(gleich) als 0,035 W/mK auf. Der Wert 0,035 W/mK bedeutet, dass im Verbund pro Meter Kantenlänge und pro Kelvin Temperaturdifferenz weniger als 0,035 Watt verloren gehen. Die Isolationsfolie kann auf dem Grundkörper aufgebracht werden, beispielsweise geklebt werden. Alternativ kann die Isolationsfolie mit dem Grundkörper zusammen coextrudiert werden.
Die polymere Folie und/oder polymere Schicht umfassen bevorzugt Polyethylenterephthalat, Ethylenvinylalkohol, Polyvinylidenchlorid, Polyamide, Polyethylen, Polypropylen, Silikone, Acrylonitrile, Polyacrylate, Polymethylacrylate und/oder Copolymere oder Gemische davon.
Die metallische Schicht enthält bevorzugt Eisen, Aluminium, Silber, Kupfer, Gold, Chrom und/oder Legierungen oder Gemische davon. Die metallische Schicht weist bevorzugt eine Dicke von 10 nm bis 400 nm, bevorzugt eine Dicke von 10 nm bis 300 nm, besonders bevorzugt eine Dicke von 10 nm bis 200 nm, auf. In einer alternativen Ausführungsform weist die metallische Schicht eine Dicke von 30 nm bis 400 nm auf. Innerhalb der genannten Schichtdicken konnte eine besonders gute Dichtigkeit der Isolationsfolie beobachtet werden.
Die metallische Schicht wird bevorzugt durch Aufdampfen auf der Isolationsfolie aufgebracht.
Die keramische Schicht enthält bevorzugt Siliziumoxide und/oder Siliziumnitride. Die keramische Schicht weist bevorzugt eine Dicke von 10 nm bis 200 nm auf.

Die polymere Schicht weist eine Dicke von 5 µm bis 80 µm, besonders bevorzugt 10 µm bis 80 µm, auf.

Die Isolationsfolie weist bevorzugt 2 bis 4 metallische Schichten oder 2 bis 4 keramische Schichten auf. Die Isolationsfolie weist bevorzugt 1 bis 4 polymere Schichten auf.

Die Isolationsfolie weist bevorzugt 2 metallische oder 2 keramische Schichten und 2 polymere Schichten in alternierender metallisch / polymerer oder keramisch / polymerer Reihenfolge auf. Die Isolationsfolie weist besonders bevorzugt 3 metallische Schichten und 3 polymere Schichten in alternierender metallisch / polymerer Reihenfolge auf.

Der Grundkörper weist bevorzugt entlang der Verglasungsinnenraumfläche eine Länge oder Breite von 5,5 mm bis 8 mm auf. Der genaue Durchmesser richtet sich nach den Abmessungen der Isolierverglasung und der gewünschten Zwischenraumgröße.

Der Grundkörper weist bevorzugt entlang der Scheibenkontaktflächen eine Länge oder Höhe von 5 mm bis 30 mm auf.

Der Grundkörper enthält bevorzugt ein Trockenmittel, bevorzugt Kieselgele, Molekularsiebe, CaCl₂, Na₂SO₄, Aktivkohle, Silikate, Bentonite, Zeolithe und/oder Gemische davon. Das Trockenmittel ist bevorzugt in einen porösen Teil des Grundkörpers eingearbeitet. Das Trockenmittel wird bevorzugt mit dem Grundkörper coextrudiert. Die Verglasungsinnenraumfläche weist bevorzugt Öffnungen auf, welche eine Aufnahme der Luftfeuchtigkeit durch das im Grundkörper eingearbeitete Trockenmittel erlauben.

Der Grundkörper enthält bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol - Polycarbonat (ABS/PC), Styrol-Acrylnitril (SAN), PET/PC, PBT/PC und/oder Copolymere oder Gemische davon.

Die Erfindung umfasst des Weiteren eine Isolierverglasung mit mindestens zwei Scheiben und einen die Scheiben umfassenden erfindungsgemäßen Abstandshalter. Eine äußere Isolierung, bevorzugt eine plastische Abdichtmasse, befindet sich in einem Randraum zwischen den Scheiben und dem erfindungsgemäßen Abstandshalter. Die äußere Isolierung enthält bevorzugt Polymere oder silanmodifizierte Polymere, besonders bevorzugt organische Polysulfide, Silikone, RTV (raumtemperturvernetzenden)-Silikonkautschuk, HTV-(hochtemperturvernetzenden) Silikonkautschuk, peroxidischvernetzten-Silikonkautschuk und/oder additionsvernetzten-Silikonkautschuk, Polyurethane, Buthylkautschuk und/oder Polyacrylate. Die Scheiben enthalten Materialien wie Glas und/oder transparente Polymere. Die Scheiben weisen bevorzugt eine optische Transparenz von > 85 % auf. Grundsätzlich sind verschiedene Geometrien der Scheiben möglich, beispielsweise rechteckige, trapezförmige und abgerundete Geometrien. Die Scheiben weisen bevorzugt eine Wärmeschutzbeschichtung auf. Die Wärmeschutzbeschichtung enthält bevorzugt Silber. Um Energieeinsparmöglichkeiten ausschöpfen zu können, kann die Isolierverglasung mit einem Edelgas, vorzugsweise Argon oder Krypton befüllt werden, die den Wärmeübergangswert im Isolierverglasungszwischenraum reduzieren.
Die Erfindung umfasst weiterhin die Verwendung eines erfindungsgemäßen Abstandshalters in Mehrfachverglasungen, bevorzugt in Isolierverglasungen.
Im Folgenden wird die Erfindung anhand von Zeichnungen näher erläutert. Die Zeichnung ist eine rein schematische Darstellung und nicht maßstabsgetreu. Sie schränkt die Erfindung in keiner Weise ein. Die Zeichnung zeigt in:
Figur 1 einen Querschnitt des erfindungsgemäßen Abstandshalters,
Figur 2 einen Querschnitt der erfindungsgemäßen Isolierverglasung und
Figur 3 einen Querschnitt der erfindungsgemäßen Isolationsfolie.

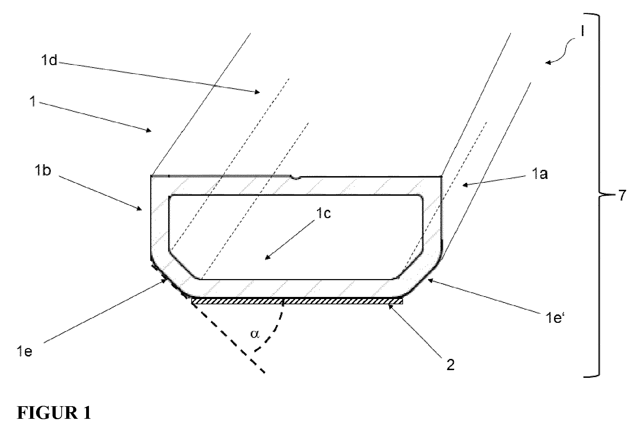

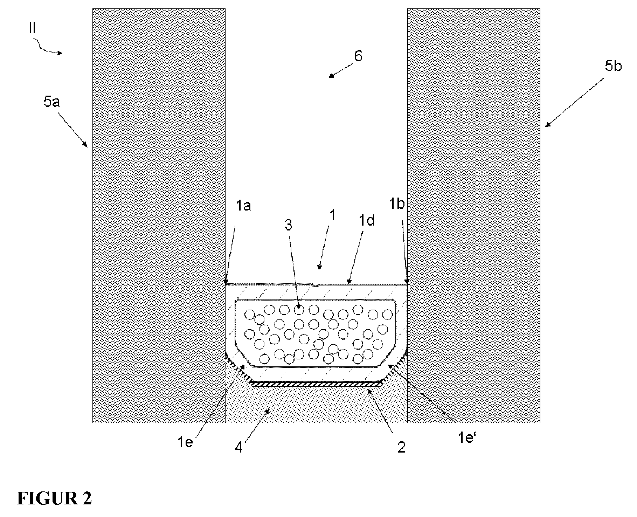

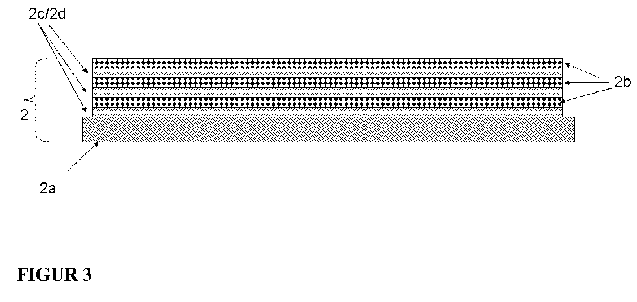

Figur 1 zeigt einen Querschnitt des erfindungsgemäßen Abstandshalters (I). Der glasfaserverstärkte polymere Grundkörper (1) umfasst zwei parallel verlaufende Scheibenkontaktflächen (1a, 1b), welche den Kontakt zu den Scheiben einer Isolierverglasung herstellen. Die Scheibenkontaktflächen (1a, 1b) sind über eine äußere Verklebungsfläche (1c) und eine Verglasungsinnenraumfläche (1d) verbunden. Zwischen der Verklebungsfläche (1c) und den Scheibenkontaktflächen (1a, 1b) sind bevorzugt zwei gewinkelte Verbindungsflächen (1e, le') angeordnet. Die Verbindungsfläche (1e, le') verläuft bevorzugt in einem Winkel α (Alfa) von 30° bis 60° zur Verklebungsfläche (1c). Der glasfaserverstärkte polymere Grundkörper (1) enthält bevorzugt Styrol-Acryl-Nitryl (SAN) und etwa 30 Gew. % bis 40 Gew. % Glasfaser. Die abgewinkelte Form der ersten Verbindungsflächen (1e) und der zweiten Verbindungsfläche (1e') verbessert die Stabilität des glasfaserverstärkten polymeren Grundkörpers (1) und ermöglicht wie in Figur 2 gezeigt eine bessere Verklebung und Isolierung des erfindungsgemäßen Abstandshalters (I). Auf der Verklebungsfläche (1c) ist eine Isolierfolie (2) angebracht, welche mindestens eine in Figur 3 gezeigte polymere Folie (2a), eine polymere Schicht (2b) sowie 2 metallische Schichten (2c) oder 2 keramische Schichten (2d) umfasst. Der polymere Grundkörper (1) und die Isolationsfolie (2) ergeben zusammen einen Verbund (7). Der gesamte erfindungsgemäße Abstandshalter (I) weist eine Wärmeleitfähigkeit kleiner als 10 W/mK und eine Gaspermeation kleiner als 0,001 g/m² h auf. Der erfindungsgemäße Verbund (7) selbst besitzt einen PSI-Wert kleiner als 0,035 W/mK. Der erfindungsgemäße Abstandshalter verbessert die Isolationswirkung.
Figur 2 zeigt einen Querschnitt der erfindungsgemäßen Isolierverglasung (II). Zwischen einer ersten Isolierglasscheibe (5a) und einer zweiten Isolierglasscheibe (5b) ist der glasfaserverstärkte polymere Grundkörper (1) mit der darauf befestigten Isolationsfolie (2) angeordnet. Die Isolationsfolie (2) ist sowohl auf der Verklebungsfläche (1c) als auch der ersten Verbindungsfläche (1e) und der zweiten Verbindungsfläche (1e') angeordnet. Die Isolationsfolie (2) isoliert zusammen mit der äußeren Isolierschicht (4) den Scheibeninnenraum (6) und vermindert den Wärmeübergang vom glasfaserverstärkten polymeren Grundkörper (1) in den Scheibeninnenraum (6). Die Isolationsfolie kann beispielsweise mit PUR-Hotmeltkleber auf dem polymeren Grundkörper (1) befestigt werden. Zwischen den Scheibenkontaktflächen (1a, 1b) und den Isolierglasscheiben (5a, 5b) ist bevorzugt eine nicht gezeigte Isolier- und Klebeschicht angeordnet. Diese enthält bevorzugt Polymere oder silanmodifizierte Polymere, besonders bevorzugt organische Polysulfide, Silikone, RTV (raumtemperturvernetzenden)-Silikonkautschuk, HTV-(hochtempertur-vernetzenden) Silikonkautschuk, peroxidischvernetzten-Silikonkautschuk und/oder additionsvernetzten-Silikonkautschuk, Polyurethane, Buthylkautschuk und/oder Polyacrylate. Die erste Isolierglasscheibe (5a) und die zweite Isolierglasscheibe (5b) weisen bevorzugt dieselben Abmessungen und Dicken auf. Die Scheiben weisen bevorzugt eine optische Transparenz von > 85 % auf. Die Isolierglasscheiben (5a, 5b) enthalten bevorzugt Glas und/oder Polymere, bevorzugt Flachglas, Floatglas, Quarzglas, Borosilikatglas, Kalk-Natron-Glas, Polymethylmethacrylat und/oder Gemische davon. In einer alternativen Ausführungsform können die erste Isolierglasscheibe (5a) und/oder die zweite Isolierglasscheibe (5b) als Verbundglasscheibe ausgebildet sein. Die erfindungsgemäße Isolierverglasung (II) bildet in diesem Fall eine Dreifach- oder Vierfachverglasung. Innerhalb des glasfaserverstärkten polymeren Grundkörpers (1) ist ein Trockenmittel (3) eingearbeitet. Das Trockenmittel (3) kann sowohl innerhalb eines zentralen Hohlraums oder in den glasfaserverstärkten polymeren Grundkörper (1) selbst eingearbeitet sein. Die Verglasungsinnenraumfläche (1d) umfasst bevorzugt kleinere Öffnungen oder Poren die einen Gasaustausch mit dem Scheibeninnenraum (6) ermöglichen.
Figur 3 zeigt einen Querschnitt der erfindungsgemäßen Isolationsfolie (2). Die Isolationsfolie (2) umfasst eine polymere Folie (2a) (Ø 12 µm) aus LLDPE (lineares Polyethylen niedrige Dichte), 3 polymere Schichten (2b) aus PET (Ø 12 µm) und 3 metallische Schichten (2c) aus Aluminium (Ø 50 nm). Die metallischen Schichten (2c) und die polymeren Schichten (2b) sind jeweils alternierend auf der polymeren Folie (2a) aufgebracht. Die metallischen Schichten (2c) und die polymeren Schichten (2a) können auch jeweils unterschiedliche Schichtdicken aufweisen. Der Aufbau der erfindungsgemäßen Isolationsfolie (2) senkt die Wärmeleitfähigkeit der Isolationsfolie im Vergleich zu herkömmlichen Metall- oder Kunststofffolien. Ein mit der genannten erfindungsgemäßen Isolationsfolie (2) und dem glasfaserverstärkten polymeren Grundkörper (1) versehener Verbund (7) weist eine thermische Wärmeleitfähigkeit kleiner als 0,035 W/mK auf. Diese niedrige Wärmeleitfähigkeit des erfindungsgemäßen Abstandshalters (I) erhöht deutlich die Effizienz einer Isolierverglasung.

### Bezugszeichenliste

- (1): glasfaserverstärkter, polymerer Grundkörper
- (1a): (erste) Scheibenkontaktfläche
- (1b): (zweite) Scheibenkontaktfläche
- (1c): Verklebungsfläche
- (1d): Verglasungsinnenraumfläche
- (1e): (erste) Verbindungsfläche
- (1e'): (zweite) Verbindungsfläche
- (2): Isolationsfolie
- (2a): polymere Folie
- (2b): polymere Schicht
- (2c): metallische Schicht
- (2d): keramische Schicht
- (3): Trockenmittel
- (4): äußere Isolierschicht
- (5a): erste Scheibe
- (5b): zweite Scheibe
- (6): Innenraum der Isolierverglasung
- (7): Verbund aus (1) und (2)
- (I): erfindungsgemäßer Abstandshalter
- (II): erfindungsgemäße Isolierverglasung

## Patentansprüche

1. Abstandshalter für Mehrfachscheiben-Isolierverglasung mindestens umfassend einen Verbund (7) aus:
a. einem glasfaserverstärkten, polymeren Grundkörper (1) umfassend zwei parallel verlaufende Scheibenkontaktflächen (1a, 1b), eine Verklebungsfläche (1c) und eine Verglasungsinnenraumfläche (1d), wobei die Scheibenlcontaktflächen (1a, 1b) und die Verklebungsfläche (1c) direkt oder über Verbindungsflächen (1e) miteinander verbunden sind,
b. einer Isolationsfolie (2) auf der Verklebungsfläche (1c) oder der Verklebungsfläche (1c) und den Verbindungsflächen (1e), wobei die Isolationsfolie (2) mindestens eine polymere Folie (2a) umfasst und wobei die Isolationsfolie (2) mehrschichtig mit metallischen Schichten (2c) und/oder keramischen Schichten (2d) aufgebaut ist,
**dadurch gekennzeichnet dass** die mindestens eine polymere Folie (2a) eine Dicke von 10 µm bis 100 µm hat, und dass die Isolationsfolie (2) zusätzlich mindestens eine polymere Schicht (2b) in einer Dicke von 5 µm bis 80 µm, mindestens zwei metallische Schichten (2c) mit einer Dicke jeder Schicht von 10 nm bis 1500 nm und/oder mindestens zwei keramische Schichten (2d) mit einer Dicke jeder Schicht von 10 nm bis 1500 nm umfasst, wobei die mindestens zwei metallischen Schichten (2c) und/oder die mindestens zwei keramischen Schichten (2d) alternierend mit der mindestens einen polymeren Schicht (2b) angeordnet sind.

2. Abstandshalter nach Anspruch 1, wobei die polymere Folie (2a) und die polymere Schicht (2b) aus dem gleichen Material bestehen.

3. Abstandshalter nach einem der Ansprüche 1 oder 2, wobei der Verbund (7) einen PSI Wert kleiner als 0,05 W/mK, bevorzugt kleiner als 0,035 W/mK aufweist.

4. Abstandshalter nach einem der Ansprüche 1 bis 3, wobei die polymere Folie (2a) und/oder polymere Schicht (2b) Polyethylenterephthalat, Ethylenvinylalkohol, Polyvinylidenchlorid, Polyamide, Polyethylen, Polypropylen, Silikone, Acrylonitrile, Polymethylacrylate und/oder Copolymere oder Gemische davon umfassen.

5. Abstandshalter nach einem der Ansprüche 1 bis 4, wobei jede metallische Schicht (2c) Eisen, Aluminium, Silber, Kupfer, Gold, Chrom und/oder Legierungen oder Gemische davon enthält.

6. Abstandshalter nach einem der Ansprüche 1 bis 5, wobei jede metallische Schicht (2c) eine Dicke von 10 nm bis 400 nm, bevorzugt 10 nm bis 300 nm, besonders bevorzugt von 10 nm bis 200 nm, aufweist.

7. Abstandshalter nach einem der Ansprüche 1 bis 6, wobei jede keramische Schicht (2d) bevorzugt Siliziumoxide und/oder Siliziumnitride oder Gemische davon enthält.

8. Abstandshalter nach einem der Ansprüche 1 bis 7, wobei jede polymere Schicht (2b) eine Dicke von 10 bis 80 µm aufweist.

9. Abstandshalter nach einem der Ansprüche 1 bis 8, wobei die Isolationsfolie (2) 2 bis 4 metallische Schichten (2c) oder 2 bis 4 keramische Schichten (2d), die auf der polymeren Folie (2a) aufgebracht sind, aufweist.

10. Abstandshalter nach einem der Ansprüche 1 bis 9, wobei die Isolationsfolie (2) 1 bis 4 polymere Schichten (2b), die auf der polymeren Folie (2a) aufgebracht sind, aufweist.

11. Abstandshalter nach einem der Ansprüche 1 bis 10, wobei der Grundkörper (1) entlang der Verklebungsfläche (1c) und der Verglasungsinnenraumfläche (1d) eine Länge oder Breite von 5,5 mm bis 8 mm aufweist.

12. Abstandshalter nach einem der Ansprüche 1 bis 11, wobei der Grundkörper (1) entlang der Scheibenkontaktflächen (1a, 1b) eine Länge von 5 mm bis 30 mm aufweist.

13. Abstandshalter nach einem der Ansprüche 1 bis 12, wobei der Grundkörper (1) ein Trockenmittel, bevorzugt Kieselgele, Molekularsiebe, CaCl₂, Na₂SO₄, Aktivkohle, Silikate, Bentonite, Zeolithe und/oder Gemische davon enthält.

14. Abstandshalter nach einem der Ansprüche 1 bis 13, wobei der Grundkörper (1) Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol - Polycarbonat (ABS/PC), Styrol-Acrylnitril (SAN), PET/PC, PBT/PC und/oder Copolymere oder Gemische davon enthält.

15. Isolierverglasung umfassend mindestens zwei Scheiben (5a, 5b), einen die Scheiben umfassenden Abstandshalter nach einem der Ansprüche 1 bis 14 und eine äußere Isolierschicht (4).

16. Verwendung eines Abstandshalters nach einem der Ansprüche 1 bis 15 in Mehrfachverglasungen, bevorzugt in Isolierverglasungen.

## Claims

1. Spacer for a multipane insulating glazing unit comprising at least a composite (7) composed of:
a. a glass-fiber-reinforced, polymeric main body (1) comprising two pane contact surfaces (1 a, 1b) running parallel to each other, an adhesive surface (1c), and a glazing interior surface (1 d), wherein the pane contact surfaces (1a, 1b) and the adhesive surface (1c) are bonded to each other directly or via bonding surfaces (1 e),
b. an insulation film (2) on the adhesive surface (1c) or the adhesive surface (1c) and the bonding surfaces (1e), wherein the insulation film (2) comprises at least one polymeric film (2a) and wherein the insulation film (2) is structured multilayered with metallic layers (2c) and/or ceramic layers (2d)
**characterized in that**
the at least one polymeric film (2a) has a thickness of 10 µm to 100 µm, and that the insulation film (2) additionally comprises at least one polymeric layer (2b) having a thickness of 5 µm to 80 µm, at least two metallic layers (2c) having a thickness of each layer of 10 nm to 1500 nm, and/or at least two ceramic layers (2d) having a thickness of each layer of 10 nm to 1500 nm, wherein the at least two metallic layers (2c) and/or the at least two ceramic layers (2d) are arranged alternatingly with the at least one polymeric layer (2b).

2. Spacer according to claim 1, wherein the polymeric film (2a) and the polymeric layer (2b) are made from the same material.

3. Spacer according to one of claims 1 or 2, wherein the composite (7) has a PSI value less than 0.05 W/mK, preferably less than 0.035 W/mK.

4. Spacer according to one of claims 1 through 3, wherein the polymeric film (2a) and/or polymeric layer (2b) include polyethylene terephthalate, ethylene vinyl alcohol, polyvinylidene chloride, polyamides, polyethylene, polypropylene, silicones, acrylonitriles, polymethyl acrylates, and/or copolymers or mixtures thereof.

5. Spacer according to one of claims 1 through 4, wherein each metallic layer (2c) contains iron, aluminum, silver, copper, gold, chromium, and/or alloys or mixtures thereof.

6. Spacer according to one of claims 1 through 5, wherein each metallic layer (2c) has a thickness of 10 nm to 400 nm, preferably 10 nm to 300 nm, particularly preferably of 10 nm to 200 nm.

7. Spacer according to one of claims 1 through 6, wherein each ceramic layer (2d) preferably contains silicon oxides and/or silicon nitrides or mixtures thereof.

8. Spacer according to one of claims 1 through 7, wherein each polymeric layer (2b) has a thickness of 10 µm to 80 µm.

9. Spacer according to one of claims 1 through 8, wherein the insulation film (2) has 2 to 4 metallic layers (2c) or 2 to 4 ceramic layers (2d), which are applied on the polymeric film (2a).

10. Spacer according to one of claims 1 through 9, wherein the insulation film (2) has 1 to 4 polymeric layers (2b), which are applied on the polymeric film (2a).

11. Spacer according to one of claims 1 through 10, wherein the main body (1) has, along the adhesive surface (1c) and the glazing interior surface (1 d), a length or width of 5.5 mm to 8 mm.

12. Spacer according to one of claims 1 through 11, wherein the main body (1) has, along the pane contact surfaces (1 a, 1 b), a length of 5 mm to 30 mm

13. Spacer according to one of claims 1 through 12, wherein the main body (1) contains a desiccant, preferably silica gels, molecular sieves, CaCl₂, Na₂SO₄, activated charcoal, silicates, bentonites, zeolites, and/or mixtures thereof.

14. Spacer according to one of claims 1 through 13, wherein the main body (1) contains polyethylene (PE), polycarbonates (PC), polypropylene (PP), polystyrene, polybutadiene, polynitriles, polyesters, polyurethanes, polymethyl methacrylates, polyacrylates, polyamides, polyethylene terephthalate (PET), polybutylene terephthalate (PBT), preferably acrylonitrile butadiene styrene (ABS), acrylonitrile styrene acrylester (ASA), acrylonitrile butadiene styrene - polycarbonate (ABS/PC), styrene acrylonitrile (SAN), PET/PC, PBT/PC, and/or copolymers or mixtures thereof.

15. Insulating glazing unit comprising at least two panes (5a, 5b), a spacer according to one of claims 1 through 14 surrounding the panes, and an outer insulating layer (4).

16. Use of a spacer according to one of claims 1 through 15 in multipane glazing units, preferably in insulating glazing units.

## Revendications

1. Intercalaire pour vitrage isolant à plusieurs vitres comprenant au moins un composite (7) constitué de :
a. un corps de base (1) polymère, renforcé par des fibres de verre, comprenant deux surfaces de contact de vitres (1a, 1b), s'étendant parallèlement, une surface de collage (1c) et une surface d'espace intérieur de vitrage (1d), les surfaces de contact de vitres (1a, 1b) et la surface de collage (1c) étant reliées entre elles directement ou par l'intermédiaire de surfaces de liaison (1 e),
b. un film isolant (2) sur la surface de collage (1c) ou la surface de collage (1c) et les surfaces de liaison (1e), le film isolant (2) comprenant au moins un film polymère (2a) et le film isolant (2) étant constitué de plusieurs couches avec des couches métalliques (2c) et/ou des couches céramiques (2d),
**caractérisé par le fait que**
le au moins un film polymère (2a) a une épaisseur de 10 µm à 100 µm, et que le film isolant (2) comprend en outre au moins une couche polymère (2b) dans une épaisseur de 5 µm à 80 µm, au moins deux couches métalliques (2c) avec une épaisseur de chaque couche de 10 nm à 1500 nm et/ou au moins deux couches céramiques (2d) avec une épaisseur de chaque couche de 10 nm à 1500 nm, les au moins deux couches métalliques (2c) et/ou les au moins deux couches céramiques (2d) étant disposées de manière alternée avec la au moins une couche polymère (2b).

2. Intercalaire selon la revendication 1, dans lequel le film polymère (2a) et la couche polymère (2b) sont constitués de la même matière.

3. Intercalaire selon l'une des revendications 1 ou 2, dans lequel le composite (7) présente une valeur PSI inférieure à 0,05 W/mK, de préférence inférieure à 0,035 W/mK.

4. Intercalaire selon l'une des revendications 1 à 3, dans lequel le film polymère (2a) et/ou la couche polymère (2b) comprennent du poly(téréphtalate d'éthylène), de l'éthylène-alcool vinylique, du poly(chlorure de vinylidène), des polyamides, du polyéthylène, du polypropylène, des silicones, des acrylonitriles, des poly(acrylates de méthyle) et/ou des copolymères ou mélanges de ceux-ci.

5. Intercalaire selon l'une des revendications 1 à 4, dans lequel chaque couche métallique (2c) contient du fer, de l'aluminium, de l'argent, du cuivre, de l'or, du chrome et/ou des alliages ou mélanges de ceux-ci.

6. Intercalaire selon l'une des revendications 1 à 5, dans lequel chaque couche métallique (2c) présente une épaisseur de 10 nm à 400 nm, de préférence 10 nm à 300 nm, de manière particulièrement préférée de 10 nm à 200 nm.

7. Intercalaire selon l'une des revendications 1 à 6, dans lequel chaque couche céramique (2d) contient de préférence des oxydes de silicium et/ou des nitrures de silicium ou des mélanges de ceux-ci.

8. Intercalaire selon l'une des revendications 1 à 7, dans lequel chaque couche polymère (2b) présente une épaisseur de 10 µm à 80 µm.

9. Intercalaire selon l'une des revendications 1 à 8, dans lequel le film isolant (2) présente de 2 à 4 couches métalliques (2c) ou de 2 à 4 couches céramiques (2d), lesquelles sont appliquées sur le film polymère (2a).

10. Intercalaire selon l'une des revendications 1 à 9, dans lequel le film isolant (2) présente de 1 à 4 couches polymères (2b), lesquelles sont appliquées sur le film polymère (2a).

11. Intercalaire selon l'une des revendications 1 à 10, dans lequel le corps de base (1) présente, le long de la surface de collage (1c) et de la surface d'espace interne de vitrage (1 d), une longueur ou largeur de 5,5 mm à 8 mm.

12. Intercalaire selon l'une des revendications 1 à 11, dans lequel le corps de base (1) présente, le long des surfaces de contact de vitres (1a, 1b), une longueur de 5 mm à 30 mm.

13. Intercalaire selon l'une des revendications 1 à 12, dans lequel le corps de base (1) contient un desséchant, de préférence des gels de silice, des tamis moléculaires, Na₂SO₄, du charbon actif, des silicates, des bentonites, des zéolithes et/ou des mélanges de ceux-ci.

14. Intercalaire selon l'une des revendications 1 à 13, dans lequel le corps de base (1) contient du polyéthylène (PE), des polycarbonates (PC), du polypropylène (PP), du polystyrène, du polybutadiène, des polynitriles, du polyester, des polyuréthanes, des poly(méthacrylates de méthyle), des polyacrylates, des polyamides, du poly(téréphtalate d'éthylène) (PET), du poly(téréphtalate de butylène) (PBT), de préférence de l'acrylonitrile-butadiène-styrène (ABS), de l'ester acrylique-styrène-acrylonitrile (ASA), de l'acrylonitrile-butadiène-styrène - polycarbonate (ABS/PC), du styrène-acrylonitrile (SAN), du PET/PC, du PBT/PC et/ou des copolymères ou mélanges de ceux-ci.

15. Vitrage isolant comprenant au moins deux vitres (5a, 5b), un intercalaire comprenant les vitres, selon l'une des revendications 1 à 14, et une couche isolante externe (4).

16. Utilisation d'un intercalaire selon l'une des revendications 1 à 15 dans des vitrages multiples, de préférence dans des vitrages isolants.
